# EUROPEAN PATENT SPECIFICATION

(11) **EP 3 535 854 B1**
(45) Date of publication and mention of the grant of the patent: **09.08.2023**
(21) Application number: 17868291.0
(22) Date of filing: 09.10.2017
(51) Int. Cl.: H04B 7/022, H04W 16/28, H04B 7/06

(54) **FLEXIBLE BEAM CONFIGURATIONS FOR DISPARATE DEPLOYMENT SCENARIOS**
FLEXIBLE STRAHLKONFIGURATIONEN FÜR UNGLEICHE EINSATZSZENARIEN
CONFIGURATIONS DE FAISCEAUX FLEXIBLES SERVANT À DES SCÉNARIOS DE DÉPLOIEMENT DISPARATES

(30) Priority: 01.11.2016 US 201662415663 P
(43) Date of publication of application: 11.09.2019
(73) Proprietor: Nokia Technologies Oy, 02610 Espoo (FI)
(72) Inventor: HAKOLA, Sami-Jukka, 90450 Kempele (FI); ENESCU, Mihai, 02120 Espoo (FI); KARJALAINEN, Juha Pekka, 90540 Oulu (FI); TURTINEN, Samuli Heikki, 91100 Ii (FI); TIIROLA, Esa Tapani, 90450 Kempele (FI); KOSKELA, Timo, 90120 Oulu (FI)
(74) Representative: Page White Farrer
(86) International application number: PCT/IB2017/056232
(87) International publication number: WO 2018/083551

(56) References cited:
- WO-A1-2017/014572
- WO-A1-2017/083514
- WO-A1-2018/020078
- US-A1- 2015 146 561
- US-A1- 2016 226 640
- US-A1- 2017 366 311
- NOKIA ET AL: "Downlink Discovery Signal for NR", 3GPP DRAFT; R1-1610289, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051150306, Retrieved from the Internet: URL:http://www.3gpp.org/ftp/Meetings_3GPP_ SYNC/RAN1/Docs/ [retrieved on 2016-10-09]
- NOKIA ET AL: "Frame structure support for DL and UL sweeping subframes", 3GPP DRAFT; R1-1610242, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051150261, Retrieved from the Internet: URL:http://www.3gpp.org/ftp/Meetings_3GPP_ SYNC/RAN1/Docs/ [retrieved on 2016-10-09]
- SAMSUNG: "DL Control Channel Design", 3GPP DRAFT; R1-1609128 DL CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051149176, Retrieved from the Internet: URL:http://www.3gpp.org/ftp/Meetings_3GPP_ SYNC/RAN1/Docs/ [retrieved on 2016-10-09]
- 'Multi-Antenna Technology for NR Interface' 3GPP TSG RAN WG1 MEETING #85; R1-165179 27 May 2016, NANJING, CHINA, XP051089824

## Description

### TECHNOLOGICAL FIELD:

The disclosure relates to wireless communications, and more particularly to multi- beam downlink transmissions on a sweeping subframe such as for example may be deployed in 5G radio access technology (RAT) systems being developed to operate in the millimeter-wave (mmWave) spectrum.

### BACKGROUND:

Wireless radio access technologies continue to be improved to handle increased data volumes and larger numbers of subscribers. The 3GPP organization is developing a new radio system (commonly referred to at this time as 5th Generation/5 G) to handle peak data rates of the order of ~10Gbps (gigabits per second) while still satisfying ultra-low latency requirements in existence for certain 4G applications. 5G intends to utilize radio spectrum on the order of GHz or more in the millimeter-wave (mmWave) band; and also to support massive MIMO (m-MIMO). M-MIMO systems are characterized by a much larger number of antennas as compared to 4G systems, as well as finer beamforming and a higher antenna gain.

Document RP-160671 by NTT DoCoMo and is entitled New SID Proposal: Study on New Radio Access Technology [3GPP TSG RAN MEETING #71; Goteborg, Sweden; 7-10 March, 2016] is a study item related to the physical layer design for the 5G new radio system. Its objective is to identify and develop technology components needed for such new radio systems so they may use any spectrum band ranging at least up to 100 GHz. The goal is to achieve a single technical framework addressing all usage scenarios, requirements and deployment scenarios defined in the document 3GPP TR 38.913 V14.0.0 (2016-10). As background, in the RANI Meeting #86 it has been agreed that when designing the initial channel access for 5G the user equipments seeking to access the radio network should be able to detect a given cell and its identifier (ID).

In the context of 5G at least, one cell can correspond to/comprise one or multiple transmission reception points (TRPs). Given that such a 5G cell can use any number of multiple beams to transmit its common control information (as well as dedicated control information and data once the UE has discovered the cell), the current understanding in 5G is that all TRPs of a given cell will transmit using the same number of beams. The disclosure herein provides a more efficient way for such cells to transmit at least their discovery signals.

"Downlink discovery Signal for NR", Nokia et. al., 3GPP Draft, R1-1610289 discusses the use of single beam and multi-beam signalling, where one beam maps to a beam reference signal (BRS) antenna port. Downlink and uplink sweeping subframes are proposed to enable beam sweeping operations, where the beam sweeping subframes comprise multiple sweeping blocks.

"Frame structure support for DL and UL sweeping subframes", Nokia et. al., 3GPP Draft, R1-1610242 discusses the use of sweeping subframes to support beam based common control pane both in downlink and uplink, where a sweeping subframe consists of several blocks, each block comprising one or more symbols. Data may be transmitted between uplink sweeping blocks and downlink sweeping blocks.

The invention is to set forth in the claims. It will be understood that aspects of the disclosure falling within the scope of the claims are part of the invention whereas aspects of the disclosure falling outside the scope of the claims are not part of the invention.

### BRIEF DESCRIPTION OF THE DRAWINGS:

FIG. 1 is a plan view illustration of a sweeping subframe of a radio frame in which different antenna groups transmit control information in different sweeping blocks of the subframe.
FIG. 2 is a prior art overview of beam configuration possibilities arranged in tabular form.
Figure 3 illustrates sweeping subframes in which data cannot be simultaneously transmitted with beam reference signals (BRS) from different antenna ports in the cell.
Figure 4 is similar to FIG. 3 but showing that in the sweeping subframes data and/or other control information may be transmitted in the cell simultaneously with the sweeping of BRS.
FIGs. 5A-B are process flow diagrams summarizing certain aspects of the disclosure from the perspective of a radio network operating with multiple TRPs and multiple antenna ports, and from the perspective of a user equipment receiving the beam configurations, respectively.
FIG. 6 is a diagram illustrating some components of certain entities of a radio network and components of a UE/mobile device, suitable for practicing various aspects of the disclosure.

### DETAILED DESCRIPTION:

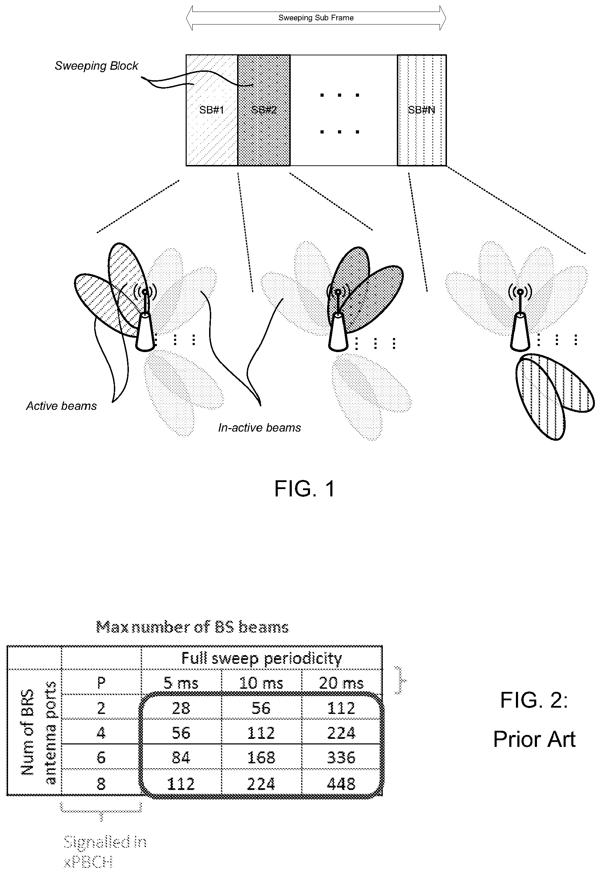

The examples below are in the context of a 5G radio system but this is only an example radio environment and not a limit to the broader teachings herein. FIG. 1 is a plan view illustration of a sweeping subframe of a radio frame in which different antenna groups transmit control information in different sweeping blocks of the subframe. In the 5G radio system a sweeping subframe provides coverage for common control channel signaling with beam forming. A sweeping subframe consists of sweeping blocks (SB) where a single block covers a specific area of the cell with a set of active antenna beams. The sweeping subframe of FIG. 1 is divided into time division duplexed (TDD) blocks where each block is associated with a group of antenna beams from a given transmission node. A similar sweeping subframe can also be used for frequency division duplexing (FDD) particularly at higher end carrier frequency bands; at lower frequency bands beamforming of common channels may not be needed.

As shown, SB#1 is associated with the group of beams of TRP#1 that are marked as active and shown by hashed shading, and respecting SB#1 all other beams of TRP#1 are considered inactive as marked and shown by shadowing. Similarly, SB#2 is associated with the group of beams of TRP#2 that are shown by dotted shading and with respect to SB#2 all other beams of TRP#2 are considered inactive as shown by shadowing. This continues for all the TRPs having a corresponding SB in the sweeping subframe, of which the last is represented in FIG. 1 as TRP#N where N is a positive integer greater than one.

While not specifically shown, a sweeping subframe may be arranged such that different groups of antenna beams of a same TRP are associated with different SBs, preferably non-adjacent SBs within the sweeping subframe. So for example the active beams associated with SB#1 and SB#2 in FIG. 1 may be transmitted by the same TRP. As the reader might imply from FIG. 1, in a 5G deployment the total number of beams required to cover a required cell area will typically be much larger than the number of concurrent active beams a given TRP is able to form. Therefore TRPs needs to sweep through the cell coverage area in the time domain by activating different set of beams on each SB. At lower 5G frequencies (for example, a few GHz) it may be feasible for a single wide beam to cover the entire cell area but these teachings are directly relevant for narrow beams that sweep in order to cover the entire cell area.

A sweeping subframe in the downlink (DL) direction carries in each SB all of the essential cell access information such as DL synchronization signals, the physical broadcast channel (PBCH) that carries system information such as MIB, SIB or the like (including PRACH/RACH configurations), paging, and other control information that needs to be broadcasted in a cell.

In a beam based configuration where the cell operates using narrow beams for both common control signalling and dedicated control signalling and data, the flow of the basic operation is summarized as follows.
- The base station (BS) transmits a periodical discovery signal.
   ∘ The synchronization signals and the physical broadcast channel (PBCH) of this discovery signal are transmitted in a single frequency network (SFN) manner in the cell over parallel beams. The number of parallel beams is determined by the BS/cell capability, which in practice means the number of transceiver units (TXRUs). Parallel beams may be transmitted from multiple TRPs belonging to the same cell,
   o Beam reference signals are transmitted using orthogonal resources to enable the UEs to detect the beams.

Pre-5G specifications support flexible beam configurations for the cell/BS as shown at FIG. 2, where the value for P in the left column equals the number of parallel beams. The example at FIG. 1 illustrates P=2 parallel beams associated with each SB of the sweeping subframe. The total number of parallel beams is equal to the number of TXRUs, where each TXRU corresponds to one antenna port and any given BS can have more than one TXRU. The number of parallel beams is restricted to the set {2, 4, 6, 8}, and in a given cell the value for P is to be signaled on the PBCH. The number of sweeping subframes per full sweep can be 5, 10 or 20 ms.

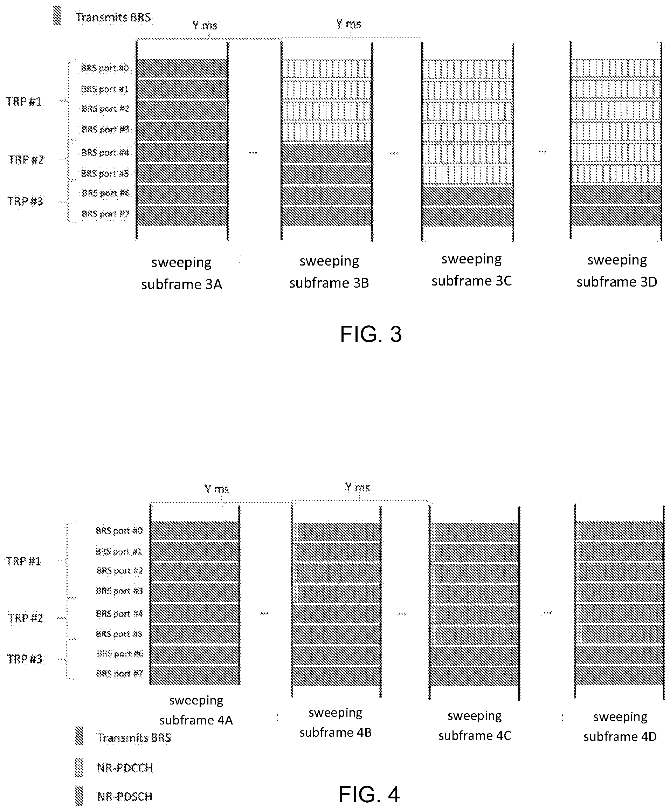

A full sweep means that every corner of the cell is covered by at least one of the beams. Assume a simple setup with 3 TRPs as in FIGs. 3-4 with the same total angular aperture for the beams from the TRPs, and assume further that TRP 1 and TRP 2 are run with the same beamwidths and TRP 3 is run with 2 times more narrow beamwidths. Additionally, assume there are two cross-polarized antenna panels in TRP1, one cross-polarized antenna panel in TRP 2 and one cross-polarized antenna panel in TRP 3, the beam sweeping configuration would be as example as follows:
- TRP 1 with 4 TXRUs and thus 4 BRS ports can sweep through its angular aperture in X sweeping symbols;
- TRP 2 with 2 TXRUs and thus 2 BRS ports can sweep through its angular aperture in 2X sweeping symbols;
- TRP 3 with 2 TXRUs and thus 2 BRS ports can sweep through its angular aperture in 4X sweeping symbols.

There may be different spatial domain apertures to cover per TRP, and TRPs may be run with different beamwidths and thus total beam sweeping time per TRP within a cell may change from one TRP to another. Furthermore, it may not be the different beam widths or different apertures between TRPs but for some TRP there may be some repetition as well, for example the same beam is repeated by N times and thus the full sweep takes longer.

While the table of FIG. 2 was developed under the assumption that a cell will have only one TRP, it can be used for the case where the cell has multiple TRPs. This leads to a problem in the multi TRP case in that all the TRPs should then be run with the same beam (sweeping) configuration. The inventors see no physical restriction on TRPs running with different beam configurations; for example a different number of panels (antennas) per TRP, different beamwidths, and/or different angular aperture for the full sweep.

To illustrate the above problem, assume a simple setup with three TRPs with the same total angular aperture for the beams from the TRPs. Further assume that TRP-1 and TRP-2 are run with the same beamwidths and TRP-3 is operating with one half that beamwidth. Finally, assume TRP-1 has two cross-polarized panels, TRP-2 has one cross-polarized panel, and TRP-3 also has one cross- polarized panel. The different beam sweeping configuration of these three TRPs would then be as follows: • TRP-1 with 4 TXRUs and thus 4 beam reference signal (BRS) ports can sweep through its angular aperture in X sweeping symbols.
- TRP-2 with 2 TXRUs and thus 2 BRS ports can sweep through its angular aperture in 2X sweeping symbols.
- TRP-3 with 2 TXRUs and thus 2 BRS ports can sweep through its angular aperture in 4X sweeping symbols.

The specification from which Fig. 2 is taken says there can only be one beam sweeping configuration per cell, and for the above example scenario would specify the sweeping configuration according to the longest sweeping duration which in this example would be according to the TRP-3 case. This means that when TRP-3 is performing its sweep the other TRPs would not be transmitting anything: TRP- 1 would not be transmitting anything for three symbols following its X sweeping symbol and TRP-2 would not be transmitting anything for the two symbols following its 2X sweeping symbols. Furthermore, when the UE is determining the cell's beam configuration from the PBCH (referred to as xPBCH in the current development of 5G specifications, or alternatively as NR-PBCH for New Radio PBCH) the UE would derive BRS ports also for TRP-1 and TRP for the sweeping symbols when those TRPs are not actually transmitting BRS. In other words, the UE would be tracking beams that do not exist because they are not transmitted.

Examples of these teachings enable a functionality that allows the cell to transmit its synchronization signals and the PBCH in a single frequency network (SFN) manner from multiple parallel beams from multiple TRPs in parallel. To this end examples of these teachings have the beam configuration defined per BRS antenna port of the TRP. This beam configuration per BRS antenna port includes the sweeping duration per BRS antenna port, and for example this sweeping duration can be defined in number of sweeping blocks.

While the specific examples below assume there is a one-to-one correspondence between BRS port and transmitted BRS, some deployments may incorporate antenna virtualization. In this case one BRS port may be formed from multiple analog beams so that multiple TXRUs are virtualized to one BRS and the mapping between TXRUs and BRSs would reflect that antenna virtualization. Further below it is explained that respective BRSs are transmitted from respective antenna ports of the respective TRPs according to the respective beam configurations, and in the case of antenna virtualization this may be implemented as more of these antenna ports representing multiple virtualized antenna ports of one of more TRPs.

In various specific but non-limiting examples such a beam configuration may be signaled in system information; and/or it may be transmitted to the UE via another radio access technology (RAT) using dedicated signaling, and/or it may be transmitted to the UE via TRP-specific synchronization or reference signals that the UE may search together with cell-specific synchronization signals. In the latter example the TRP-specific synchronization/reference signal(s) may have multiple hypothesis to signal, for example quantized information of how many subframes, symbols or block of symbols define the sweeping duration for the TRP. Such TRP-specific synchronization/reference signal(s) may be derived from the (parent) cell-specific synchronization signal and it may be in one fixed location relative to the cell-specific synchronization signal. Alternatively, there may be multiple possible fixed positions relative to the location of the cell-specific synchronization signal. Either implementation limits the search space in which the UE is to look for the TRP-specific synchronization/reference signal(s); in the former example there is one location and in the latter example the UE will need to search among no more than a few pre-defined possible locations, preferably 4, 8, 12 or 16 possible locations. The pre-defined location or locations relative to the cell-specific synchronization signal may be specified in the relevant radio access technology standards so the network entities will know where to place the TRP-specific synchronization/reference signal(s) and all the UEs will know where to look for them without explicit or implicit signaling per cell.

In examples of these teachings, during the symbols that a given TRP is not transmitting BRS it will be transmitting other control or data information and keeping the same traffic direction DL or UL as the symbols transmitted from the other TRPs that are performing sweeping.

From above BRS configuration that is broadcast in system information or sent in dedicated signaling on another RAT as above, a given UE that is not connected to the network may derive the BRS beams that can transmit the PDCCH during sweeping subframes. This BRS configuration can also be used by connected UEs; when their serving beams belong to the BRS ports that are doing sweeping the UE needs to monitor downlink control information (DCI) alongside measuring BRSs from BRS ports that are doing sweeping. And correspondingly, the connected UEs whose serving beams are performing BRS sweeping during sweeping subframes can assume that no (new radio/5G) PDCCH will be transmitted to them during those sweeping subframes.

Following is a non-limiting example that sets forth how such per-BRS configuration might operate in a practical radio system. Assume the same radio scenario as set forth above: there are a total of three TRPs covering a cell and they have the same total angular aperture for the beams from these TRPs; TRP-1 and TRP-2 are run with the same beamwidths and TRP-3 is run with half that beamwidth and thus the TRP-3 beams are more narrow; and TRP-1 has two cross-polarized panels while TRP-2 and TRP-3 each have one cross-polarized panel. The different beam sweeping configuration of these three TRPs would then be as follows:
- TRP-1 with 4 TXRUs and thus 4 BRS ports can sweep through its angular aperture in X sweeping symbols.
- TRP-2 with 2 TXRUs and thus 2 BRS ports can sweep through its angular aperture in 2X sweeping symbols.
- TRP-3 with 2 TXRUs and thus 2 BRS ports can sweep through its angular aperture in 4X sweeping symbols.

FIGs. 3 and 4 illustrate four downlink sweeping subframes in such an example radio environment in which the value of X is one subframe and each subframe consists of 14 sweeping blocks. There is a sweeping subframe every Y ms, and for example if the value for Y in this example is 5 ms then per the table at FIG. 2 the full sweep periodicity would be 20 ms since 4 sweeping subframes are required for a full sweep of the cell. FIG. 3 depicts these four DL sweeping subframes 3A-3D without the possibility for dedicated data by TRPs that have already finished sweeping for a given (full) sweeping period, so all of the shaded sweeping blocks/symbol positions in FIG. 3 represents a BRS transmission by the corresponding BRS port and TRP while all of the unshaded sweeping blocks/symbol positions represent nothing being transmitted from the corresponding BRS port and TRP. In the FIG. 3 example the full sweeping period is 4 sweeping subframes 3A, 3B, 3C, 3D; the sweeping period length is according to longest sweeping duration among TRPs which in this example is TRP-3.

For convenience, in FIGs. 3-4 the BRS ports are numbered sequentially regardless of which TRP they are associated. When TRP-3 is performing its sweep in FIG. 3, other TRPs would not be transmitting anything so for example in sweeping subframe 3B none of the BRS ports 0-3 of TRP-1 are transmitting anything since TRP-2 is transmitting BRS in its full sweep of the cell (same for TRS-3). From the bulleted beam configurations above the sweeping durations are as summarized at table 1 below:
TRP port sweeping duration

**Table 1: Example Sweeping Durations**

| **TRP** | **port** | **sweeping duration** | |
|---|---|---|---|
| TRP-1 | BRS port 0 | X=1 subframe | 14 symbols |
| TRP-1 | BRS port 1 | X=1 subframe | 14 symbols |
| TRP-1 | BRS port 2 | X=1 subframe | 14 symbols |
| TRP-1 | BRS port 3 | X=1 subframe | 14 symbols |
| TRP-2 | BRS port 4 | X=2 subframes | 28 symbols |
| TRP-2 | BRS port 5 | X=2 subframes | 28 symbols |
| TRP-3 | BRS port 6 | X=4 subframes | 56 symbols |
| TRP-3 | BRS port 7 | X=4 subframes | 56 symbols |

To simplify the signaling there may be some pre-determined grouping of ports (assuming cross-polarized antennas as noted above). In this regard, the sweeping duration X may have some quantized value ranges to minimize the overhead, for example X could be one subframe or slot or so for forth. Keeping X as one subframe spanning 14 symbols, grouping ports according to a pre-defined grouping could simplify the signaling that Table 1 above implies to that of Table 2 below, where the groupings themselves are not signaled since they are pre-defined:

**Table 2: Simplified Sweeping Duration Signaling**

| **TRP** | **port** | **sweeping duration** | |
|---|---|---|---|
| TRP-1 | BRS port 0 & 1 | X=1 subframe | 14 symbols |
| TRP-1 | BRS port 2 & 3 | X=1 subframe | 14 symbols |
| TRP-2 | BRS port 4 & 5 | X=1 subframe | 28 symbols |
| TRP-2 | BRS port 6 & 7 | X=1 subframe | 56 symbols |

According to the invention, FIG. 4 is similar to FIG. 3 except the TRPs/ports are able to transmit downlink control information and data in the sweeping subframes 4A-D that they are finished sending their respective BRSs for the full sweeping period. So for example in sweeping subframe 4B some or all of the BRS ports 0-3 of TRP-1 can be transmitting control information and/or data even though TRP-2 and TRP- 3 are each transmitting BRS as part of their full sweep of the cell. There are several ways to avoid interference between BRS sweeping and dedicated control and data, for example simple frequency- division multiplexing should avoid interference between BRS and the other control information/data. Different shading in FIG. 4 delineates the BRSs (which are identically disposed as in FIG. 3) from the data (physical downlink shared channel PDSCH) and from the other control information/DC I (physical downlink control channel PDCCH). In FIG. 4 the PDCCH signaling is restricted to only the first symbol position but this is an example only and not limiting to the broader teachings herein.

According to the invention, downlink sweeping subframes are defined so that downlink data transmission can be take place in parallel to sweeping blocks, as FIG. 4 illustrates. By learning the BRS configuration as above via signaling, any UE may derive the BRS beams that can transmit PDCCH during sweeping subframes. This information can be used by connected UEs who can see that when their serving beams belong to the BRS that are doing sweeping this connected UE needs to perform DCI monitoring alongside its BRS measurements from BRS ports that are doing the sweeping. And correspondingly UEs of which serving beams that perform BRS sweeping during sweeping subframes can assume that no PDCCH is going to be transmitted to them during that serving beam's sweeping subframes.

There can be uplink sweeping also, for example where a UE not in a connected state sends its connection request on the physical random access channel (PRACH). Such uplink PRACH sweeping may exhibit similar beam behavior as in the above downlink examples in that some TRPs may be "faster" in sweeping than other(s). In this case TRPs finished with their PRACH sweeping could receive dedicated uplink control signaling (physical uplink control channel PUCCH) and data (physical uplink shared channel PUSCH) while some other TRPs are doing PRACH sweeping. Dedicated uplink control and data will need to follow the PRACH cyclic prefix (CP) sizes and symbol lengths in order to remain symbol synchronized with the PRACH.

An alternative option is to configure for "faster" sweeping TRPs (for example, those TRPs that can receive using more parallel beams than some other TRPs, those TRPs that are utilizing a wider beamwidth, etc.) with more PRACH resources in the time domain associated per downlink BRS port to increase capacity, and/or define longer PRACH symbols to provide higher coverage.

Certain examples of these teachings provide the technical effect of improving system efficiency since the sweeping subframes can be used for dedicated control signaling and/or for data. A further technical effect is that these examples support different TRP configurations within a cell.

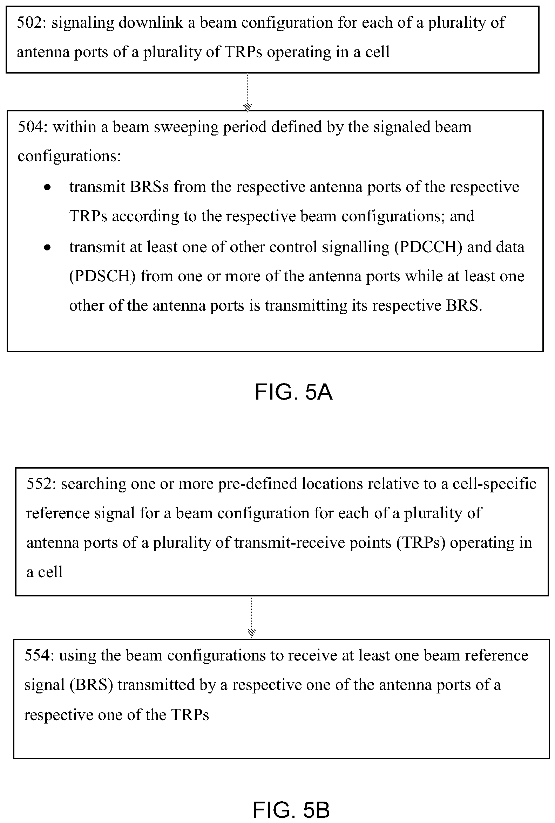

According to the invention, FIG. 5A is a flow diagram from the perspective of the radio network that operates a plurality of TRPs, and in a given deployment this may be the BS or some other network entity that controls multiple TRPs in a cell. At block 502 the network signals downlink a beam configuration for each of a plurality of antenna ports of a plurality of transmit-receive points (TRPs) operating in a cell. All of block 504 occurs within a beam sweeping period defined by the signaled beam configurations. Within that beam sweeping period BRSs are transmitted from the respective antenna ports of the respective TRPs according to the respective beam configurations; and also within that same beam sweeping period at least one of other control signalling such as a PDCCH and data such as a PDSCH is transmitted from one or more of the antenna ports while at least one other of the antenna ports is transmitting its respective BRS. In the FIG. 4 example above the beam sweeping period encompassed the illustrated 4 sweeping subframes 4A-D, the BRSs are shown by shading corresponding to "transmit BRS", other control signaling is represented as shading corresponding to "NR-PDCCH" and data is represented as shading corresponding to "NR-PDSCH".

In one particular example the beam configurations are signaled downlink in broadcast system information. In another they are signaled via dedicated signaling to the UE on a different RAT than the TRPs are utilizing, and in still another example the beam configurations are signaled downlink via TRP-specific synchronization or reference signals disposed at one or more pre-defined locations relative to a cell-specific reference signal. In that latter example each of the TRP-specific synchronization or reference signals may be derived from the cell-specific reference signal.

According to the invention, the beam sweeping period is defined as a longest sweeping duration among all of the signaled beam configurations, so for example in FIG. 4 the beam sweeping period is 4 sweeping subframes due to TRP-3 needing 4X sweeping symbols to fully sweep through its angular aperture. While the examples above assumed 14 symbols per sweeping subframe, each of the beam configurations may indicate for the respective antenna port a sweeping duration that is more generally defined as an integer number of sweeping blocks.

Since the idea is for the same overall beam sweep of the BRSs to be repeated in each sequentially subsequent beam sweeping period, then with reference to block 504 of FIG. 5 A in each of those subsequent sweeping periods the transmitting of the BRSs is repeated as at block 504, and the transmitting of the other control signalling and/or the data is also repeated as at block 504 but of course it is some further control signalling and/or some further data that is transmitted in these subsequent beam sweeping periods.

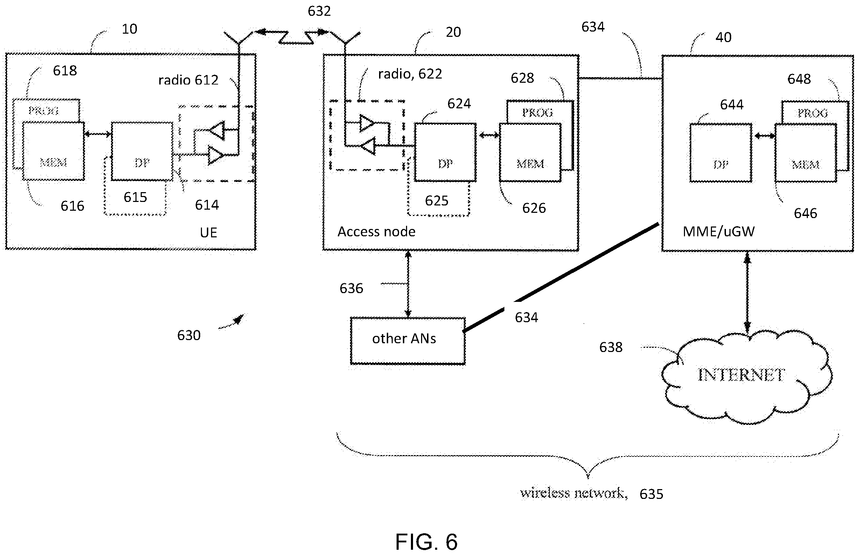

For the case in which there is a central controller in the radio network that coordinates the different TRPs to operate as described herein (for example, in the position of the MME/uGW at FIG. 6), then certain examples of these teachings may be made manifest in an apparatus comprising at least one processor and at least one memory tangibly storing a computer program; wherein the at least one processor is configured with the at least one memory and the computer program to cause the apparatus to control the plurality of TRPs to perform the process shown at FIG. 5A, possibly also as more fully detailed immediately above. Such examples can also be made manifest in a computer readable memory tangibly storing a computer program that when executed causes a host radio network to control the plurality of TRPs to perform the process shown at FIG. 5A, also possibly as more fully detailed immediately above.

According to the invention, FIG. 5B is a flow diagram from the perspective of the user equipment (UE) that receives the beam configurations. While the UE may receive all of the beam configurations themselves, since the beams are not cell-wide the UE likely will not receive all of the beams transmitted by the various TRPs and their antenna ports, and in an extreme case the UE may receive only one beam. A UE first powering up will not know in advance which beam or beams in the cell it will be able to receive so it will preferably obtain all of the beam configurations from system information or from dedicated signalling on a different RAT as detailed above. From this perspective, at block 552 of Fig. 5B the UE searches one or more pre-defined locations relative to a cell-specific reference signal for a beam configuration for each of a plurality of antenna ports of a plurality of transmit -receive points (TRPs) operating in a cell. As mentioned above, these pre-defined locations may be published in a specification that governs operation of the 5G radio access technology (or whichever RAT is employing these teachings) and so the UE will have all of the possible locations stored in its local memory. At block 554 of FIG. 5B the UE uses the beam configurations to receive at least one beam reference signal (BRS) transmitted by a respective one of the antenna ports of a respective one of the TRPs. Depending on the network' s specific scheduling this UE may also receive other control signaling or it may receive or send user data in other portions of sweeping subframes in which the network is not transmitting any BRSs as FIG. 4 illustrates.

As detailed above, the beam configurations that the UE receives from its searching at block 552 in some examples may comprise TRP-specific synchronization or reference signals, where such TRP-specific signals are disposed at the searched one or more pre-defined locations relative to a cell-specific reference signal. In a more particular example each of these TRP-specific synchronization or reference signals may be derived from the cell-specific reference signal.

In another specific but non-limiting example each of the beam configurations that the UE receives will indicate, for the respective antenna port, a sweeping duration defined as an integer number of sweeping blocks.

Certain examples of these teachings may be made manifest in an apparatus comprising at least one processor and at least one memory tangibly storing a computer program; wherein the at least one processor is configured with the at least one memory and the computer program to cause the apparatus to perform the process shown at FIG. 5B, and as more fully detailed immediately above. Such examples can also be made manifest in a computer readable memory tangibly storing a computer program that when executed causes a host user equipment to perform the process shown at FIG. 5B and as more fully detailed immediately above.

According to the invention, FIG. 5 A can be considered as an algorithm, and more generally represents steps of a method, and/or certain code segments of software stored on a computer readable memory or memory device that embody the FIG. 5 A algorithm for implementing these teachings from the perspective of that respective device (base station/radio access node, radio network controller, or similar). Similarly, FIG. 5B can be considered as an algorithm, steps of a method, and/or code segments of software stored on a computer readable memory or memory device that embody the FIG. 5B algorithm for implementing these teachings from the perspective of a mobile radio device such as a user equipment. In this regard the disclosure may be embodied as a non-transitory program storage device readable by a machine such as for example one or more processors of a radio network controller and/or TRPs, where the storage device tangibly embodies a program of instructions executable by the machine for performing operations such as those shown at FIG. 5A or 5B and detailed above.

FIG 6 is a high level diagram illustrating some relevant components of various communication entities that may implement various portions of these teachings, including a base station identified generally as a radio network access node 20, a mobility management entity (MME) which may also be co-located with a user-plane gateway (uGW) 40, and a user equipment (UE) 10. In the wireless system 630 of FIG. 6 a communications network 635 is adapted for communication over a wireless link 632 with an apparatus, such as a mobile communication device which may be referred to as a UE 10, via a radio network access node 20. The network 635 may include a MME/Serving-GW40 that provides connectivity with other and/or broader networks such as a publicly switched telephone network and/or a data communications network (e.g., the internet 638). As noted above, where the TRPs are coordinated by some further network entity for operating according to these teachings such a coordinating network entity may be in the position of that MME/uGW 40. In other examples it may be one of the TRPs themselves that takes on that coordinating function.

The UE 10 includes a controller, such as a computer or a data processor (DP) 614 (or multiple ones of them), a computer-readable memory medium embodied as a memory (MEM) 616 (or more generally a non-transitory program storage device) that stores a program of computer instructions (PROG) 618, and a suitable wireless interface, such as radio frequency (RF) transceiver or more generically a radio 612, for bidirectional wireless communications with the radio network access node 20 via one or more antennas. In general terms the UE 10 can be considered a machine that reads the MEM/non-transitory program storage device and that executes the computer program code or executable program of instructions stored thereon. While each entity of FIG. 6 is shown as having one MEM, in practice each may have multiple discrete memory devices and the relevant algorithm(s) and executable instructions/program code may be stored on one or across several such memories.

In general, the various examples of the UE 10 can include, but are not limited to, mobile user equipments or devices, cellular telephones, smartphones, wireless terminals, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

Each of the TRPs is represented in FIG. 6 by the radio network access node 20 which also includes a controller, such as a computer or a data processor (DP) 624 (or multiple ones of them), a computer-readable memory medium embodied as a memory (MEM) 626 that stores a program of computer instructions (PROG) 628, and a suitable wireless interface, such as a RF transceiver or radio 622, for communication with the UE 10 via one or more antennas. The radio network access node 20 is coupled via a data/control path 634 to the MME 40. The path 634 may be implemented as an SI interface. The radio network access node 20 may also be coupled to other radio network access nodes/TRPs via data/control path 636, which may be implemented as an X5 interface. Or in some deployments there may be one TRP as shown in FIG. 6 as the access node 20, and multiple remote radio heads (RRHs) taking on the actions described above for the remaining TRPs and ports.

The MME 640 includes a controller, such as a computer or a data processor (DP) 644 (or multiple ones of them), a computer-readable memory medium embodied as a memory (MEM) 646 that stores a program of computer instructions (PROG) 648.

At least one of the PROGs 618, 628, 648 is assumed to include program instructions that, when executed by the associated one or more DPs, enable the device to operate in accordance with exemplary examples of this disclosure. That is, various exemplary examples of this disclosure may be implemented at least in part by computer software executable by the DP 614 of the UE 10; and/or by the DP 624 of the radio network access node 20 and/or the MME 40; and/or by hardware, or by a combination of software and hardware (and firmware).

For the purposes of describing various exemplary examples in accordance with this disclosure the UE 10 and the radio network access node 20 may also include dedicated processors 615 and 625 respectively.

The computer readable MEMs 616, 626 and 646 may be of any memory device type suitable to the local technical environment and may be implemented using any suitable data storage technology, such as semiconductor based memory devices, flash memory, magnetic memory devices and systems, optical memory devices and systems, fixed memory and removable memory. The DPs 614, 624 and 644 may be of any type suitable to the local technical environment, and may include one or more of general purpose computers, special purpose computers, microprocessors, digital signal processors (DSPs) and processors based on a multicore processor architecture, as non-limiting examples. The wireless interfaces (e.g., RF transceivers 612 and 622) may be of any type suitable to the local technical environment and may be implemented using any suitable communication technology such as individual transmitters, receivers, transceivers or a combination of such components.

A computer readable medium may be a computer readable signal medium or a non-transitory computer readable storage medium/memory. A non-transitory computer readable storage medium/memory does not include propagating signals and may be, for example, but not limited to, an electronic, magnetic, optical, electromagnetic, infrared, or semiconductor system, apparatus, or device, or any suitable combination of the foregoing. Computer readable memory is non-transitory because propagating mediums such as carrier waves are memoryless. More specific examples (a non- exhaustive list) of the computer readable storage medium/memory would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

It should be understood that the foregoing description is only illustrative. Various alternatives and modifications can be devised by those skilled in the art. For example, features recited in the various dependent claims could be combined with each other in any suitable combination(s). Accordingly, the description is intended to embrace all such alternatives, modifications and variances which fall within the scope of the appended claims.

A communications system and/or a network node/base station may comprise a network node or other network elements implemented as a server, host or node operationally coupled to a remote radio head. At least some core functions may be carried out as software run in a server (which could be in the cloud) and implemented with network node functionalities in a similar fashion as much as possible (taking latency restrictions into consideration). This is called network virtualization. "Distribution of work" may be based on a division of operations to those which can be run in the cloud, and those which have to be run in the proximity for the sake of latency requirements. In macro cell/small cell networks, the "distribution of work" may also differ between a macro cell node and small cell nodes. Network virtualization may comprise the process of combining hardware and software network resources and network functionality into a single, software-based administrative entity, a virtual network. Network virtualization may involve platform virtualization, often combined with resource virtualization. Network virtualization may be categorized as either external, combining many networks, or parts of networks, into a virtual unit, or internal, providing network-like functionality to the software containers on a single system.

Below are some acronyms used herein:
- BRS: Beam Reference Signal
- BRRS: Beam Refinement Reference Signal
- BS: Base Station (also eNB for enhanced nodeB)
- DL: Downlink
- MME: Mobility Management Entity
- m-MIMO: Massive Multiple-Input Multiple Output
- mmWave: Millimeter wave
- NR: new Radio
- OFDM: Orthogonal Frequency Division Multiplex
- PRACH: physical random access channel
- RS: Reference signal
- RX: Receiver
- TRP: Transmission-Reception point
- TX: Transmitter
- UE: User Equipment
- uGW: user-plane gateway
- UL: Uplink
- xPDCCH: new Physical Downlink Control Channel (e.g., for 5G)
- xPUCCH: new Physical Uplink Control Channel (e.g., for 5G)

## Claims

1. A user equipment apparatus (10), comprising:
at least one processor (614); and
at least one memory (616) including computer program code (618);
the at least one memory (616) and the computer program code (618) are configured, with the at least one processor (614), to cause the apparatus (10) to:
search one or more pre-defined locations relative to a cell-specific reference signal for receiving, from a network, a beam configuration for each of a plurality of antenna ports of a plurality of transmit-receive points, operating in a cell; and
within a beam sweeping period defined by the longest sweeping duration among the signaled beam configurations:
receive at least one beam reference signal, transmitted by a given one of the antenna ports of a respective one of the transmit-receive points in a first portion of sweeping subframes; and
receive at least one of control signaling and data from the given one of the antenna ports in a second portion of the sweeping subframes without beam reference signal transmission from the given one of the antenna ports,
wherein a sweeping duration of the given one of the antenna ports is shorter than the longest sweeping duration.

2. The apparatus (10) according to claim 1, wherein the beam configurations are received in broadcast system information.

3. The apparatus (10) according to claim 1, wherein the beam configurations comprise transmit-receive point specific synchronization or reference signals disposed at the searched one or more pre-defined locations relative to the cell-specific reference signal.

4. The apparatus (10) according to claim 3, wherein each of the transmit-receive point specific synchronization or reference signals is derived from the cell-specific reference signal.

5. The apparatus (10) according to claim 1, wherein each of the beam configurations indicates for the respective antenna port a sweeping duration defined as an integer number of sweeping blocks.

6. A radio access node or radio network controller apparatus (20), comprising:
at least one processor (624); and
at least one memory (626) including computer program code (628);
the at least one memory (626) and the computer program code (628) are configured, with the at least one processor (624), to cause the apparatus (20) to:
signal in downlink a beam configuration for each of a plurality of antenna ports of a plurality of transmit-receive points operating in a cell;
within a beam sweeping period defined by the longest sweeping duration among the signaled beam configurations:
transmit beam reference signals, from a given one of the antenna ports of a respective transmit-receive points in a first portion of sweeping subframes; and
transmit at least one of control signaling and data from the given one of the antenna ports in a second portion of the sweeping subframes without beam reference signal transmission while at least one other of the antenna ports is transmitting its respective beam reference signal,
wherein a sweeping duration of the given one of the antenna ports is shorter than the longest sweeping duration.

7. The apparatus (20) according to claim 6, wherein the at least one memory (626) and the computer program code (628) are further configured to, with the at least one processor (624), cause the apparatus (20) to signal the beam configurations in broadcast system information.

8. The apparatus (20) according to claim 6, wherein the at least one memory (626) and the computer program code (628) are further configured to, with the at least one processor (624), cause the apparatus (20) to signal the beam configurations in downlink via transmit-receive point specific synchronization or reference signals disposed at one or more pre-defined locations relative to a cell-specific reference signal.

9. The apparatus (20) according to claim 8, wherein each of the transmit-receive point specific synchronization or reference signals is derived from the cell-specific reference signal.

10. A method performed by a user equipment, comprising:
searching (552) one or more pre-defined locations relative to a cell-specific reference signal to receive, from a network, a beam configuration for each of a plurality of antenna ports of a plurality of transmit-receive points operating in a cell; and
within a beam sweeping period defined by the longest sweeping duration among the signaled beam configurations:
receiving (554) at least one beam reference signal, transmitted by a given one of the antenna ports of a respective one of the transmit-receive points in a first portion of sweeping subframes; and
receiving at least one of control signaling and data from the given one of the antenna ports in a second portion of the sweeping subframes without beam reference signal transmission from the given one of the antenna ports,
wherein a sweeping duration of the given one of the antenna ports is shorter than the longest sweeping duration.

11. The method according to claim 10, wherein the beam configurations are received in broadcast system information.

12. The method according to claim 10, wherein the beam configurations comprise transmit-receive point-specific synchronization or reference signals disposed at the searched one or more pre-defined locations relative to the cell-specific reference signal.

13. The method according to claim 12, wherein each of the transmit-receive point-specific synchronization or reference signals is derived from the cell-specific reference signal.

14. A method performed by a radio access node or radio network controller, comprising:
signaling in downlink a beam configuration for each of a plurality of antenna ports of a plurality of transmit-receive points operating in a cell;
within a beam sweeping period defined by the longest sweeping duration among the signaled beam configurations:
transmitting beam reference signals from a given one of the antenna ports of the respective transmit-receive points in a first portion of sweeping subframes; and
transmitting at least one of control signaling and data from the given one of the antenna ports in a second portion of the sweeping subframes without beam reference signal transmission while at least one other of the antenna ports is transmitting its respective beam reference signal,
wherein a sweeping duration of the given one of the antenna ports is shorter than the longest sweeping duration.

## Patentansprüche

1. Teilnehmereinrichtungsvorrichtung, (10), die Folgendes umfasst:
mindestens einen Prozessor (614); und
mindestens einen Speicher (616), der einen Computerprogrammcode (618) beinhaltet;
der mindestens eine Speicher (616) und der Computerprogrammcode (618) sind dazu ausgelegt, die Vorrichtung (10) mit dem mindestens einen Prozessor (614) zu Folgendem zu veranlassen:
Suchen nach einem oder mehreren vordefinierten Orten relativ zu einem zellspezifischen Referenzsignal zum Empfangen einer Strahlauslegung für jeden einer Vielzahl von Antennenanschlüssen einer Vielzahl von Übertragungs-/Empfangspunkten, die in einer Zelle betrieben werden, von einem Netzwerk; und
in einer Strahlschwenkperiode, die durch die längste Schwenkdauer unter den signalisierten Strahlauslegungen definiert ist:
Empfangen von mindestens einem Strahlreferenzsignal, das von einem gegebenen der Antennenanschlüsse eines jeweiligen der Übertragungs-/Empfangspunkte in einem ersten Abschnitt von Schwenkungsunterframes übertragen wird; und
Empfangen von mindestens einem einer Steuersignalisierung und Daten vom gegebenen der Antennenanschlüsse in einem zweiten Abschnitt der Schwenkungsunterframes ohne eine Strahlreferenzsignalübertragung vom gegebenen der Antennenanschlüsse,
wobei eine Schwenkdauer des gegebenen der Antennenanschlüsse kürzer ist als die längste Schwenkdauer.

2. Vorrichtung (10) nach Anspruch 1, wobei die Strahlauslegungen in Broadcastsysteminformationen empfangen werden.

3. Vorrichtung (10) nach Anspruch 1, wobei die Strahlauslegungen für Übertragungs-/Empfangspunkte spezifische Synchronisations- oder Referenzsignale umfassen, die an dem einen oder den mehreren vordefinierten Orten relativ zum zellspezifischen Referenzsignal angeordnet sind.

4. Vorrichtung (10) nach Anspruch 3, wobei jedes der für Übertragungs-/Empfangspunkte spezifischen Synchronisations-oder Referenzsignale vom zellspezifischen Referenzsignal abgeleitet wird.

5. Vorrichtung (10) nach Anspruch 1, wobei jede der Strahlauslegungen für den jeweiligen Antennenanschluss eine Schwenkdauer anzeigt, die als eine ganzzahlige Anzahl von Schwenkblöcken definiert ist.

6. Funkzugangsknoten oder Funknetzwerksteuervorrichtung (20), der bzw. die Folgendes umfasst:
mindestens einen Prozessor (624); und
mindestens einen Speicher (626), der einen Computerprogrammcode (628) beinhaltet;
der mindestens eine Speicher (626) und der Computerprogrammcode (628) sind dazu ausgelegt, die Vorrichtung (20) mit dem mindestens einen Prozessor (624) zu Folgendem zu veranlassen:
Signalisieren einer Strahlauslegung für jeden einer Vielzahl von Antennenanschlüssen einer Vielzahl von Übertragungs-/Empfangspunkten, die in einer Zelle betrieben werden, in Downlink;
in einer Strahlschwenkperiode, die durch die längste Schwenkdauer unter den signalisierten Strahlauslegungen definiert ist:
Übertragen von Strahlreferenzsignalen von einem gegebenen der Antennenanschlüsse eines jeweiligen Übertragungs-/Empfangspunkte in einem ersten Abschnitt von Schwenkungsunterframes; und
Übertragen von mindestens einem einer Steuersignalisierung und Daten vom gegebenen der Antennenanschlüsse in einem zweiten Abschnitt der Schwenkungsunterframes ohne eine Strahlreferenzsignalübertragung, während mindestens ein anderer der Antennenanschlüsse sein jeweiliges Strahlreferenzsignal überträgt,
wobei eine Schwenkdauer des gegebenen der Antennenanschlüsse kürzer ist als die längste Schwenkdauer.

7. Vorrichtung (20) nach Anspruch 6, wobei der mindestens eine Speicher (626) und der Computerprogrammcode (628) ferner dazu ausgelegt sind, mit dem mindestens einen Prozessor (624) die Vorrichtung (20) zu veranlassen, die Strahlauslegungen in Broadcastsysteminformationen zu signalisieren.

8. Vorrichtung (20) nach Anspruch 6, wobei der mindestens eine Speicher (626) und der Computerprogrammcode (628) ferner dazu ausgelegt sind, mit dem mindestens einen Prozessor (624) die Vorrichtung (20) zu veranlassen, die Strahlauslegungen in Downlink via für Übertragungs-/Empfangspunkte spezifische Synchronisations- oder Referenzsignale zu signalisieren, die an einem oder mehreren vordefinierten Orten relativ zu einem zellspezifischen Referenzsignal angeordnet sind.

9. Vorrichtung (20) nach Anspruch 8, wobei jedes der für Übertragungs-/Empfangspunkte spezifischen Synchronisations-oder Referenzsignale vom zellspezifischen Referenzsignal abgeleitet wird.

10. Verfahren, das von einer Teilnehmereinrichtung durchgeführt wird und Folgendes umfasst:
Suchen (552) nach einem oder mehreren vordefinierten Orten relativ zu einem zellspezifischen Referenzsignal, um für jeden einer Vielzahl von Antennenanschlüssen einer Vielzahl von Übertragungs-/Empfangspunkten, die in einer Zelle betrieben werden, eine Strahlauslegung von einem Netzwerk zu empfangen, und
in einer Strahlschwenkperiode, die durch die längste Schwenkdauer unter den signalisierten Strahlauslegungen definiert ist:
Empfangen (554) von mindestens einem Strahlreferenzsignal, das von einem gegebenen der Antennenanschlüsse eines jeweiligen der Übertragungs-/Empfangspunkte in einem ersten Abschnitt von Schwenkungsunterframes übertragen wird; und
Empfangen von mindestens einem einer Steuersignalisierung und Daten vom gegebenen der Antennenanschlüsse in einem zweiten Abschnitt der Schwenkungsunterframes ohne eine Strahlreferenzsignalübertragung vom gegebenen der Antennenanschlüsse,
wobei eine Schwenkdauer des gegebenen der Antennenanschlüsse kürzer ist als die längste Schwenkdauer.

11. Verfahren nach Anspruch 10, wobei die Strahlauslegungen in Broadcastsysteminformationen empfangen werden.

12. Verfahren nach Anspruch 10, wobei die Strahlauslegungen für Übertragungs-/Empfangspunkte spezifische Synchronisations-oder Referenzsignale umfassen, die an dem einen oder den mehreren vordefinierten Orten relativ zum zellspezifischen Referenzsignal angeordnet sind.

13. Verfahren nach Anspruch 12, wobei jedes der für Übertragungs-/Empfangspunkte spezifischen Synchronisations-oder Referenzsignale vom zellspezifischen Referenzsignal abgeleitet wird.

14. Verfahren, das von einem Funkzugangsknoten oder einer Funknetzwerksteuerung durchgeführt wird und Folgendes umfasst:
Signalisieren einer Strahlauslegung für jeden einer Vielzahl von Antennenanschlüssen einer Vielzahl von Übertragungs-/Empfangspunkten, die in einer Zelle betrieben werden, in Downlink;
in einer Strahlschwenkperiode, die durch die längste Schwenkdauer unter den signalisierten Strahlauslegungen definiert ist:
Übertragen von Strahlreferenzsignalen von einem gegebenen der Antennenanschlüsse der jeweiligen Übertragungs-/Empfangspunkte in einem ersten Abschnitt von Schwenkungsunterframes; und
Übertragen von mindestens einem einer Steuersignalisierung und Daten vom gegebenen der Antennenanschlüsse in einem zweiten Abschnitt der Schwenkungsunterframes ohne eine Strahlreferenzsignalübertragung, während mindestens ein anderer der Antennenanschlüsse sein jeweiliges Strahlreferenzsignal überträgt,
wobei eine Schwenkdauer des gegebenen der Antennenanschlüsse kürzer ist als die längste Schwenkdauer.

## Revendications

1. Appareil d'équipement utilisateur (10), comprenant :
au moins un processeur (614) ; et
au moins une mémoire (616) comportant un code de programme informatique (618) ;
l'au moins une mémoire (616) et le code de programme informatique (618) sont configurés, avec l'au moins un processeur (614), pour amener l'appareil (10) à :
rechercher un ou plusieurs emplacements prédéfinis par rapport à un signal de référence spécifique à la cellule pour recevoir d'un réseau une configuration de faisceau pour chacun d'une pluralité de ports d'antenne d'une pluralité de points d'émission-réception fonctionnant dans une cellule ; et
dans une période de balayage de faisceau définie par la durée de balayage la plus longue parmi les configurations de faisceau signalées :
recevoir au moins un signal de référence de faisceau émis par un port d'antenne donné des ports d'antenne d'un point d'émission-réception respectif des points d'émission-réception dans une première partie de sous-trames de balayage ; et
recevoir une signalisation de commande et/ou des données du port d'antenne donné des ports d'antenne dans une deuxième partie des sous-trames de balayage sans transmission de signal de référence de faisceau du port d'antenne donné des ports d'antenne,
dans lequel une durée de balayage du port d'antenne donné des ports d'antenne est plus courte que la durée de balayage la plus longue.

2. Appareil (10) selon la revendication 1, dans lequel les configurations de faisceau sont reçues dans des informations de système de diffusion.

3. Appareil (10) selon la revendication 1, dans lequel les configurations de faisceau comprennent des signaux de synchronisation ou de référence spécifiques au point d'émission-réception disposés aux un ou plusieurs emplacements prédéfinis recherchés par rapport au signal de référence spécifique à la cellule.

4. Appareil (10) selon la revendication 3, dans lequel chacun des signaux de synchronisation ou de référence spécifiques au point d'émission-réception est dérivé du signal de référence spécifique à la cellule.

5. Appareil (10) selon la revendication 1, dans lequel chacune des configurations de faisceau indique pour le port d'antenne respectif une durée de balayage définie comme un nombre entier de blocs de balayage.

6. Noeud d'accès radio ou appareil (20) de commande de réseau radio, comprenant :
au moins un processeur (624) ; et
au moins une mémoire (626) comportant un code de programme informatique (628) ;
l'au moins une mémoire (626) et le code de programme informatique (628) sont configurés, avec l'au moins un processeur (624), pour amener l'appareil (20) à :
signaler en liaison descendante une configuration de faisceau pour chacun d'une pluralité de ports d'antenne d'une pluralité de points d'émission-réception fonctionnant dans une cellule ;
dans une période de balayage de faisceau définie par la durée de balayage la plus longue parmi les configurations de faisceau signalées :
transmettre des signaux de référence de faisceau à partir d'un port d'antenne donné des ports d'antenne de points d'émission-réception respectifs dans une première partie de sous-trames de balayage ; et
transmettre une signalisation de commande et/ou des données à partir du port d'antenne donné des ports d'antenne dans une deuxième partie des sous-trames de balayage sans transmission de signal de référence de faisceau tandis qu'au moins un autre des ports d'antenne transmet son signal de référence de faisceau respectif,
dans lequel une durée de balayage du port d'antenne donné des ports d'antenne est plus courte que la durée de balayage la plus longue.

7. Appareil (20) selon la revendication 6, dans lequel l'au moins une mémoire (626) et le code de programme informatique (628) sont en outre configurés pour, avec l'au moins un processeur (624), amener l'appareil (20) à signaler les configurations de faisceau dans des informations de système de diffusion.

8. Appareil (20) selon la revendication 6, dans lequel l'au moins une mémoire (626) et le code de programme informatique (628) sont en outre configurés pour, avec l'au moins un processeur (624), amener l'appareil (20) à signaler les configurations de faisceau en liaison descendante via des signaux de synchronisation ou de référence spécifiques au point d'émission-réception disposés aux un ou plusieurs emplacements prédéfinis par rapport à un signal de référence spécifique à la cellule

9. Appareil (20) selon la revendication 8, dans lequel chacun des signaux de synchronisation ou de référence spécifiques au point d'émission-réception est dérivé du signal de référence spécifique à la cellule.

10. Procédé réalisé par un équipement utilisateur, comprenant :
la recherche (552) d'un ou plusieurs emplacements prédéfinis par rapport à un signal de référence spécifique à la cellule pour recevoir d'un réseau une configuration de faisceau pour chacun d'une pluralité de ports d'antenne d'une pluralité de points d'émission-réception fonctionnant dans une cellule ; et
dans une période de balayage de faisceau définie par la durée de balayage la plus longue parmi les configurations de faisceau signalées :
la réception (554) d'au moins un signal de référence de faisceau émis par un port d'antenne donné des ports d'antenne d'un point d'émission-réception respectif des points d'émission-réception dans une première partie de sous-trames de balayage ; et
la réception d'une signalisation de commande et/ou des données du port d'antenne donné des ports d'antenne dans une deuxième partie des sous-trames de balayage sans transmission de signal de référence de faisceau du port d'antenne donné des ports d'antenne,
dans lequel une durée de balayage du port d'antenne donné des ports d'antenne est plus courte que la durée de balayage la plus longue.

11. Procédé selon la revendication 10, dans lequel les configurations de faisceau sont reçues dans des informations de système de diffusion.

12. Procédé selon la revendication 10, dans lequel les configurations de faisceau comprennent des signaux de synchronisation ou de référence spécifiques au point d'émission-réception disposés aux un ou plusieurs emplacements prédéfinis recherchés par rapport au signal de référence spécifique à la cellule.

13. Procédé selon la revendication 12, dans lequel chacun des signaux de synchronisation ou de référence spécifiques au point d'émission-réception est dérivé du signal de référence spécifique à la cellule.

14. Procédé réalisé par un noeud d'accès radio ou un dispositif de commande de réseau radio, comprenant la signalisation en liaison descendante d'une configuration de faisceau pour chacun d'une pluralité de ports d'antenne d'une pluralité de points d'émission-réception fonctionnant dans une cellule ;
dans une période de balayage de faisceau définie par la durée de balayage la plus longue parmi les configurations de faisceau signalées :
la transmission de signaux de référence de faisceau à partir d'un port d'antenne donné des ports d'antenne des points d'émission-réception respectifs dans une première partie de sous-trames de balayage ; et
la transmission d'une signalisation de commande et/ou des données à partir du port d'antenne donné des ports d'antenne dans une deuxième partie des sous-trames de balayage sans transmission de signal de référence de faisceau tandis qu'au moins un autre des ports d'antenne transmet son signal de référence de faisceau respectif,
dans lequel une durée de balayage du port d'antenne donné des ports d'antenne est plus courte que la durée de balayage la plus longue.
